# EUROPÄISCHE PATENTSCHRIFT

(11) **EP 2 601 086 B1**
(45) Veröffentlichungstag und Bekanntmachung des Hinweises auf die Patenterteilung: **02.03.2016**
(21) Anmeldenummer: 11752200.3
(22) Anmeldetag: 01.09.2011
(51) Int. Cl.: B61C 9/50

(54) **FAHRMOTOR MIT KÜHLUNG**
DRIVE MOTOR WITH COOLING SYSTEM
MOTEUR DE TRACTION À REFROIDISSEMENT

(30) Priorität: 09.09.2010 DE 102010040491
(43) Veröffentlichungstag der Anmeldung: 12.06.2013
(73) Patentinhaber: Siemens Aktiengesellschaft, 80333 München (DE)
(72) Erfinder: KÖRNER, Olaf, 90469 Nürnberg (DE)
(86) Internationale Anmeldenummer: PCT/EP2011/065067
(87) Internationale Veröffentlichungsnummer: WO 2012/031966

(56) Entgegenhaltungen:
- DE-A1- 10 244 902
- GB-A- 438 210

## Beschreibung

Die Erfindung betrifft ein elektrisch angetriebenes Fahrzeug, insbesondere ein Schienenfahrzeug entsprechend den Merkmalen des Oberbegriffes des unabhängigen Anspruches 1.

Bei elektrisch angetriebenen Fahrzeugen, insbesondere Schienenfahrzeugen, aber auch Elektroautomobilen, wird durch die vorgebbare Spurweite, der Bauraum für die elektrischen Betriebsmittel zum Antrieb dieses Fahrzeuges stark eingeschränkt. Als Spurweite wird bei einer Eisenbahn oder einem Schienenfahrzeug der Abstand zwischen den Innenkanten der Schiene eines Gleises bezeichnet. Bei Automobilen ist die Spurweite der Abstand zwischen dem linken und rechten Rad einer Achse, genauer der Abstand zwischen den Reifenmitten.

Eine angestrebte kompakte Bauweise von derartigen Fahrzeugen mit ausreichender Leistung des Antriebs und ausreichender Kühlung der Antriebskomponenten, beispielsweise der Fahrmotoren wird dadurch erheblich erschwert.

So ist die Kühlung eines Fahrmotors durch einen Eigenlüfter bekannt, der auf der Welle des Fahrmotors angeordnet ist und mit der Drehzahl des Fahrmotors umläuft.

Nachteilig dabei ist, dass ein solcher Lüfter axialen Bauraum des Fahrmotors innerhalb der Spurweite einnimmt, wobei der dieser Bauraum somit nicht als Aktivteil dem Fahrmotor zur Verfügung steht. Bei derartigen elektrisch angetriebenen Fahrzeugen führt dies zu Einbußen in der Drehmoment- und Leistungsdichte des Fahrmotors.

Ebenso ist der Einbau von elektrisch angetriebenen Fremdlüftern in einem Wagenkasten möglich, was aber höhere Kosten, Maßerhöhung und Bauraumverbrauch im Fahrzeug selbst, also dem Nutzraum oder Fahrgastraum verursacht. Des Weiteren werden dadurch zusätzliche Hilfsbetriebeleistungen benötigt, beispielsweise eine eigene elektrische Versorgung und deren Überwachung.

Des Weiteren ist der Einbau eines elektrischen Fremdlüfters in das Drehgestell eines Schienenfahrzeugs vorstellbar, dies setzt den Motor des Lüfters aber äußerst hohen Schwingungsund Stoßbelastungen aus, was die Zuverlässigkeit eines derartigen Fremdlüfters reduziert.

GB 438 210 bildet den nächstliegenden Stand der Technik.

Ausgehend davon liegt der Erfindung die Aufgabe zugrunde, eine Kühlung eines elektrisch angetriebenen Fahrzeugs, insbesondere Schienenfahrzeugs zu schaffen, die eine zuverlässige Kühlung eines Fahrmotors und/oder mechanischer Antriebskomponenten gewährleistet, ohne den Einbauraum der für den Antrieb notwendigen elektrischen Betriebsmittel, wie z.B. Fahrmotoren einzuschränken.

Die Lösung der gestellten Aufgabe gelingt durch ein elektrisch angetriebenes Fahrzeug, insbesondere Schienenfahrzeug gemäss den Merkmalen des Kennzeichens von Anspruch 1.

Erfindungsgemäß wird nunmehr ein Lüfter durch einen separaten Antrieb eines Großrades durch ineinandergreifen der jeweiligen Zähne der Ritzel angetrieben. Dies hat den Vorteil, dass durch diese zusätzliche Getriebeübersetzung vom Großrad auf ein Lüfterritzel die Drehzahl des Lüfters unabhängig von der Drehzahl des Fahrmotors gewählt werden kann.

Damit kann vorteilhafterweise die Drehzahl des Fahrmotors auch über der Drehzahlgrenze einer herkömmlichen Eigenbelüftung von ca. 4500 bis 5000 1/min liegen. Damit reduzieren sich die durch den Lüfter verursachten Geräusche. Somit sind auch Fahrmotoren mit Drehzahlen über 5000 1/min einsetzbar.

Durch den mechanischen Antrieb des Lüfters über ein Lüfterritzel, das über das Großrad angetrieben wird, bleibt eine hohe Zuverlässigkeit der Belüftung des Fahrmotors erhalten. Dies ist insbesondere bei permanenterregten Fahrmotoren im Ausfallbetrieb (Umrichterausfall) wegen der Eisenverluste bei hohen Fahrgeschwindigkeiten des elektrisch angetriebenen Fahrzeugs wichtig.

Durch die räumliche Nähe des Lüfters zum Getriebe wird vorteilhafterweise die durch den Lüfter geförderte Kühlluft gezielt über zumindest einige Teile des Getriebes angesaugt und damit eine Kühlung dieser Komponenten herbeigeführt. Das Getriebe setzt sich dabei u.a. aus dem Antriebsritzel, dem Großrad und dem Lüfterritzel und deren Schmiermittel und Lager zusammen.

Insbesondere bei einem halbabgefederten Antrieb eines elektrischen Fahrzeugs mit achsreitendem Getriebe sind somit zwei Möglichkeiten der Anordnung des Lüfters und dessen Gehäuse möglich:
- eine getriebefeste Anordnung des Gehäuses des Lüfters, so dass die angesaugte Kühlluft über einen flexiblen Kühlkanal, z.B. einem Faltenbalg zum Fahrmotor geführt wird. Der drehgestellfeste Fahrmotor und das achsreitende Getriebe, also Großrad, Antriebsritzel und Lüfterritzel, bewegen sich relativ zueinander im Rahmen der Freiheitsgrade der Primärfederstufe des Gestells,
- eine drehgestellfeste Anordnung des Gehäuses des Lüfters, so dass das Antriebsmoment des Lüfters über eine flexible Kupplung oder Welle vom Getriebeabrieb des achsreitenden Getriebes, also vom Lüfterritzel zum drehgestellfesten Lüfter und dessen Gehäuse übertragen wird.

Die erfindungsgemäße Kühlung des Fahrmotors ist bei jeder Art von elektrisch angetriebenen Fahrzeugen auch von Schienenfahrzeugen mit Getriebeantrieben denkbar, wie sie z.B. in Form von Tatzlagerantrieben oder vollabgefederten Antrieben vorliegen.

Die Kühlung des Fahrmotors ist gemäß einer Ausführungsform der Erfindung durchzugsbelüftet ausgeführt werden, d.h. der über Lufteintrittsöffnungen in den Innenraum des Fahrmotors eingeblasene Luftstrom tritt an einer vorgegebenen Stelle aus dem Gehäuse des Fahrmotors aus. Während seines Durchgangs durch den Fahrmotor werden die Im Fahrmotor liegenden Komponenten, wie Wickelköpfe, Blechpakete, Lager, eventuelle Permanentmagnete gekühlt.

Gemäß einer anderen Ausführungsform ist der Fahrmotor gekapselt, d.h. in seinem nach außen hermetisch abgeschlossenen Innenraum befindet sich ein gasförmiges oder flüssiges Kühlmedium, Luft oder Öl. Dieses Kühlmedium wird durch den auf das Gehäuse gerichteten Kühlluftstrom gekühlt und trägt somit zur Kühlung des Fahrmotors bei. Kühlrippen oder Wärmetauscher am Gehäuse des Fahrmotors verstärken die Kühlwirkung.

Vorteilhafterweise wird durch die erfindungsgemäße Anordnung des Lüfters außerhalb des Bereichs der mechanischen Bremsen "saubere" Kühlluft angesaugt und so eine Verschmutzung des Fahrmotors oder des Gehäuses durch metallischen Bremsabtrieb vermieden.

Die Erfindung sowie weitere vorteilhafte Ausgestaltungen der Erfindung werden anhand einer Figur dargestellt.

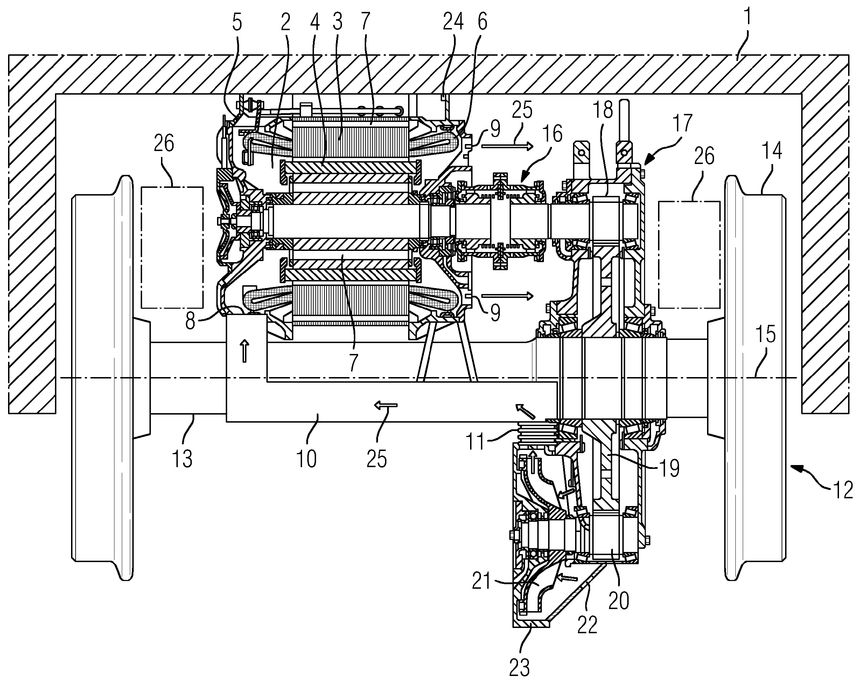

Die Figur zeigt prinzipiell dargestellt ein Drehgestell 1 eines nicht näher dargestellten elektrischen Fahrzeugs, insbesondere eines Schienenfahrzeugs. Das Drehgestell ist dabei an einem nicht näher dargestellten Fahrzeugrahmen befestigt, wie z.B. an einem Wagenkasten eines elektrischen Triebfahrzeugs.

Die wesentlichen Grundgedanken der Erfindung können selbstverständlich ohne weiteres auf ein Automobil mit Elektroantrieb übertragen werden.

An dem Drehgestell 1 eines Schienenfahrzeugs oder einem Fahrzeugrahmen eines Automobils ist ein Fahrmotor 2 über Aufhängeelemente 24 oder Schrauben verbunden. Der Fahrmotor 2 weist in einem Gehäuse 5 einen Stator 3 und Rotor 4 auf, wobei der Rotor 4 über eine Welle und eine Kupplung 16, die insbesondere als Bogenzahnkupplung ausgeführt ist, ein Antriebsritzel 18 antreibt. Der Stator 3 weist außerdem, ebenso wie der Rotor 4 im Wesentlichen axial verlaufende Ausnehmungen 7 auf, die axiale Kühlkanäle bilden und der Führung eines Kühlluftstromes dienen und somit u.a. zur Kühlung der Blechpakete von Stator 3 und Rotor 4 beitragen.

An den Stirnseiten des Stators 3 sind Wickelköpfe 6 eines nicht näher dargestellten Wicklungssystems im Stator 3 vorhanden. Die Längsachse des Fahrmotors 2 ist parallel zu einer Achse 15 einer Radsatzwelle 13 ausgerichtet. Die Radsatzwelle 13 bildet zusammen mit den beiden Treibrädern 14 einen Radsatz 12. Durch das Drehgestell 1 oder einen Fahrzeugrahmen, den Zwischenraum zwischen den Treibrädern 14, einem Gleiskörper oder Fahrbahnbelag ist nunmehr das zur Verfügung stehende Bauvolumen für den Fahrmotor 2, eine Kupplung, Teile des Getriebes, der Bauraum für die Bremse 26 und einer Kühlungsvorrichtung vorgegeben.

Nunmehr wird ein Luftstrom zur Kühlung des Fahrmotors 2 nicht in axialer Verlängerung des Fahrmotors 2 erzeugt, da dies eine axiale Reduzierung der Aktivteile also des Stators 3 und des Rotors 4 des Fahrmotors 2 zur Folge hätte, sondern unter Beibehaltung der axialen Ausdehnungen wird der Luftstrom zur Kühlung über einen Luftkanal 10 bereitgestellt.

Erfindungsgemäß treibt nunmehr ein Antriebsritzel 18 ein mit der Radsatzwelle 13 drehfest verbundenes Großrad 19 an, das wiederum, idealerweise auf der anderen Seite der Radsatzwelle 13 ein Lüfterritzel 20 antreibt, das direkt mit dem Lüfter 21 gekoppelt ist und diesen in Rotation versetzt.

Der Lüfter 21 erzeugt einen Luftstrom 25, der über einen Luftkanal 10 dem Fahrmotor 2 zugeführt wird. Nachdem das Lüftergehäuse 23 in der vorliegende Ausführung mit dem Getriebegehäuse fest verbunden ist, ist vorteilhafterweise zwischen dem Luftkanal 10 und dem Lüftergehäuse 23 eine flexible Verbindung, insbesondere ein Faltenbalg 11 vorgesehen. Stöße und Erschütterungen die über die Treibräder 14, das Großrad und das Lüfterritzel auf das Lüftergehäuse 23 übertragen werden, führen somit zu den erforderlichen Freiheitsgraden, da der Luftkanal 10 mit dem Gehäuse 5 des Fahrmotors 2 starr verbunden ist.

In der vorliegenden Ausführungsform saugt nunmehr der Lüfter 21 vorteilhafterweise über zumindest Teile des Getriebes (Antriebsritzel, Großrad, Lüfterritzel) den zu fördernden Luftstrom 25 an. Dabei wird zumindest zum Teil das Getriebe mit gekühlt.

Der Luftstrom 25 tritt über eine Lufteinlassöffnung 8 in das Gehäuse 5 des Fahrmotors 2 ein und durchströmt u.a. die Ausnehmungen 7 von Rotor 4 und Stator 3 und führt insgesamt im Gehäuse zur Kühlung der dort vorhandenen Komponenten, wie Wickelköpfe, Blechpaket, Lager, Wicklungssystem etc.

Die Luftführung innerhalb des Gehäuses 5 des Fahrmotors 2 kann durch Luftleitelemente derart gestaltet werden, dass besondere Wärmequellen bevorzugt gekühlt werden, so dass ein gleichbleibendes Temperaturniveau innerhalb des Fahrmotors 2 erreicht wird. Solche Wärmequellen stellen insbesondere diese Wickelköpfe 6 an den Stirnseiten des Stators 3 dar. An Luftaustrittsöffnungen 9 wird der nunmehr erwärmte Luftstrom 25 nach außen gelenkt.

In einer nicht näher dargestellten Ausführungsform kann der Luftstrom 25 auch einen gekapselten Fahrmotor 2 kühlen, wobei dabei der geschlossene Innenkühlkreislauf des Fahrmotors 2 durch den Luftstrom von außen über geeignete Wärmetauscher beispielsweise Kühlrippen rückgekühlt wird.

## Patentansprüche

1. Elektrisch angetriebenes Fahrzeug, insbesondere Schienenfahrzeug mit folgenden Merkmalen:
- zumindest einem Gestell (1), das mit einem Fahrzeugrahmen mechanisch gekoppelt ist,
- zumindest einem Fahrmotor (2), der in dem Gestell (1) positioniert ist, wobei dessen Längsachse parallel zu einer Achse (15) eines anzutreibenden Radsatzes (12) angeordnet ist und wobei der Fahrmotor (2) über ein Antriebsritzel (18) ein mit einer Welle, insbesondere Radsatzwelle (13) drehfest verbundenes Großrad (19) antreibt,
- einem Lüfter (21), der über ein Lüfterritzel (20) mit dem Großrad gekoppelt ist,
- einem Luftkanal (10), der den von Lüfter (21) erzeugten Luftstrom (25) zu mindestens einem Fahrmotor (2) führt, **dadurch gekennzeichnet,**
- **dass** Luftansaugöffnungen (22) des Lüfters (21) derart angeordnet sind, dass die angesaugte Luft zumindest zum Teil über das durch Antriebsritzel (18), Großrad (19) und Lüfterritzel (20) gebildete Getriebe gesaugt und so zur Kühlung des Getriebes beiträgt,
- wobei der Lüfter außerhalb des Bereichs der mechanischen Bremsen Kühlluft ansaugt.

2. Elektrisch angetriebenes Fahrzeug nach Anspruch 1, **dadurch gekennzeichnet, dass** der Luftkanal (10) über einen Faltenbalg (11) mit dem Lüftergehäuse (23) und/oder mit dem Gehäuse (5) des Fahrmotors (2) verbunden ist.

3. Elektrisch angetriebenes Fahrzeug nach Anspruch 1 oder 2, **dadurch gekennzeichnet, dass** der Fahrmotor (2) durchzugsbelüftet ist.

4. Elektrisch angetriebenes Fahrzeug nach einem der vorhergehenden Ansprüche, **dadurch gekennzeich**n e t , dass der Luftstrom (25) des Lüfters (21) und/oder Geräuschemissionen des Lüfters (21) durch geeignete Auswahl eines Lüfterritzels (20) vorgebbar sind.

5. Elektrisch angetriebenes Fahrzeug nach einem der vorhergehenden Ansprüche, **dadurch gekennzeich**n e t , dass der Fahrmotor (2) ein Asynchronmotor oder ein permanenterregter Motor ist.

## Claims

1. Electrically driven vehicle, in particular rail vehicle with the following features:
- at least one frame element (1) which is mechanically coupled to a vehicle frame,
- at least one drive motor (2) which is positioned in the frame element (1), wherein the longitudinal axis of said frame element (1) is arranged parallel to an axis (15) of a wheelset (12) to be driven and wherein the drive motor (2), via a drive pinion (18), drives a large wheel (19) connected in a torque-proof manner to a shaft, in particular a wheelset shaft (13),
- a fan (21) which is coupled to the large wheel via a fan pinion (20),
- an air duct (10) which conducts the air flow (25) generated by the fan (21) to at least one drive motor (2),
**characterised in that**
- air suction openings (22) of the fan (21) are arranged such that the air is sucked in at least partly over the gear train formed by drive pinion (18), large wheel (19) and fan pinion (20) and thus contributes to the cooling of the gear train,
- wherein the fan sucks in cooling air outside the area of the mechanical brake.

2. Electrically driven vehicle according to claim 1, **characterised in that** the air duct (10) is connected to the fan housing (23) and/or to the housing (5) of the drive motor (2) via a bellows (11).

3. Electrically driven vehicle according to claim 1 or 2, **characterised in that** the drive motor (2) is open-circuit ventilated.

4. Electrically driven vehicle according to one of the preceding claims, **characterised in that** the air flow (25) of the fan (21) and/or noise emissions of the fan (21) can be specified by the suitable selection of a fan pinion (20).

5. Electrically driven vehicle according to one of the preceding claims, **characterised in that** the drive motor (2) is an asynchronous motor or a permanently excited motor.

## Revendications

1. Véhicule électrique, notamment véhicule ferroviaire, ayant les caractéristiques suivantes :
- au moins un bâti (1) qui est couplé mécaniquement à un châssis de véhicule,
- au moins un moteur (2) de traction qui est placé dans le bâti (1), son axe longitudinal étant parallèle à un axe (15) d'un essieu (12) à entraîner et le moteur (2) de traction entraîné par un pignon (18) d'entraînement, une grande roue (19) solidaire en rotation d'un arbre, notamment d'un arbre (13) d'essieu,
- un ventilateur (21) qui est couplé à la grande roue par un pignon (20) de ventilateur,
- un canal (10) pour de l'air, qui conduit le courant (25) d'air produit par le ventilateur (21) au au moins un moteur (2) de traction,
**caractérisé**
- **en ce qu'**il est prévu des ouïes (22) d'aspiration d'air du ventilateur (21) de manière à ce que l'air aspiré soit aspiré au moins en partie en passant par la transmission formée par le pignon (18) d'entraînement, par la grande roue (19) et par le pignon (20) du ventilateur et contribue ainsi au refroidissement de la transmission,
- dans lequel le ventilateur aspire de l'air de refroidissement en dehors de la partie des freins mécaniques.

2. Véhicule électrique suivant la revendication 1, **caractérisé en ce que** le canal (10) pour de l'air communique avec la carcasse (23) du ventilateur et/ou avec la carcasse (5) du moteur (2) de traction par un soufflet (11) à plis.

3. Véhicule électrique suivant la revendication 1 ou 2, **caractérisé en ce que** le moteur (2) de traction est blindé ventilé.

4. Véhicule électrique suivant l'une des revendications précédentes, **caractérisé en ce que** le courant (25) d'air du ventilateur (21) et/ou les émissions de bruit du ventilateur (21) peuvent être données à l'avance par un choix approprié d'un pignon (20) de ventilateur.

5. Véhicule électrique suivant l'une des revendications précédentes, **caractérisé en ce que** le moteur (2) de traction est un moteur asynchrone ou un moteur à excitation permanente.
